Europäisches Patentamt

European Patent Office

Office européen des brevets

(11) Veröffentlichungsnummer: **0 212 505**
A2

# EUROPÄISCHE PATENTANMELDUNG

(21) Anmeldenummer: 86111005.4

(22) Anmeldetag: 08.08.86

(51) Int. Cl.⁴: **G 06 K 19/06**

---

(30) Priorität: 09.08.85 DE 3528687

(43) Veröffentlichungstag der Anmeldung: 04.03.87
Patentblatt 87/10

(84) Benannte Vertragsstaaten: AT BE CH DE FR GB IT LI LU NL SE

(71) Anmelder: Oldenbourg, R., Graphische Betriebe GmbH
Rosenheimer Strasse 145, D-8000 München 80 (DE)

(72) Erfinder: Graf von Waldburg, Ferdinand,
Schwanenweg 23, D-8000 München 82 (DE)
Erfinder: Badem, Helmut, Raffoltstrasse 21,
D-8069 Schweitenkirchen (DE)
Erfinder: Königer, Walter, Waldtruderinger Strasse 58,
D-8000 München 82 (DE)

(74) Vertreter: Patentanwälte Grünecker, Kinkeldey,
Stockmair & Partner, Maximilianstrasse 58,
D-8000 München 22 (DE)

---

(54) Verfahren zum Herstellen einer Ausweiskarte und Ausweiskarte.

(57) Die Erfindung betrifft ein Verfahren zum Herstellen einer Ausweiskarte mit einem an einem Kontakte aufweisenden Träger lose angebrachten IC-Baustein, wobei mehrere überwiegend aus einem Thermoplast bestehende Schichten eines Schichtaufbaus mit Ausschnitten zur Unterbringung des Trägers mit seinem IC-Baustein unter Druck und Temperatur miteinander verschweißt werden, sowie eine solche Ausweiskarte. Bekannte Verfahren haben den Nachteil eines außerordentlich großen Material- und verfahrenstechnischen Aufwandes bei der Herstellung der Ausweiskarten. Erfindungsgemäß wird der Nachteil dadurch beseitigt, daß der über die Unterseite des Trägers vorstehende IC-Baustein beim Verschweißen des Schichtaufbaus in einen eng an den Umriß des IC-Bausteins angepaßten Ausschnitt einer Schicht des Schichtaufbaus eingebracht wird, auf der sich der Träger abstützt, und daß der IC-Baustein gegen Ende des Verschweißvorganges im Ausschnitt durch einfließenden Thermoplast eingebettet wird.

EP 3082-25/Sü

Die Erfindung betrifft ein Verfahren der im Oberbegriff

## Beschreibung

Die Erfindung betrifft ein Verfahren der im Oberbegriff des Patentanspruchs angeführten Gattung sowie eine Ausweiskarte dieser Art.

Bei einem aus der DE-OS 32 48 385 bekannten Verfahren dieser Art wird der Träger aus zwei Folienschichten unter loser Befestigung des IC-Bausteines vorgefertigt und von einer Seite des Schichtaufbaus durch die von dieser Seite offenen Ausschnitte in den Schichten eingeführt, wobei die Ausschnitte zwar verschieden groß aber hinsichtlich des Trägers und des IC-Bausteines wesentlich größer ausgebildet sind. Der dann noch freibleibende Hohlraum wird mit einem vernetzbaren Füllmaterial ausgefüllt, das beim abschließenden Verschweißen des Schichtaufbaus unter Druck und Temperatur für eine schonende Einbettung des Trägers und insbesondere des IC-Bausteins sorgt. Der Material- und verfahrenstechnische Aufwand ist hierbei außerordentlich groß, denn es wird nicht nur eine Folie des Trägers mit einem zusätzlichen Kleber beschichtet, sondern es muß auch der einbettende , vernetzbare Thermoplast eine besondere Konsistenz und ein besonderes Vernetzungsverhalten unter dem Einfluß von Temperatur und Druck haben und in einem gesonderten Verfahrens-

schritt eingebracht werden. Trotzdem ist nicht mit ausreichender Sicherheit gewährleistet, daß der nur lose am Träger befestigte IC-Baustein nicht unzulässigen Druckbelastungen und Bewegungen beim Verschweißen ausgesetzt wird, die gegebenenfalls die Kontaktverbindungen zu den freiliegenden Kontakten gefährden.

Bei einem anderen, aus der DE-OS 30 29 939 bekannten Verfahren werden im noch nicht laminierten Kartenverbund Pufferzonen in Form von Zwischenschichten vorgesehen, die den Kaschierdruck vom empfindlichen IC-Baustein fernhalten sollen. Außerdem muß der Druckverlauf beim Kaschieren speziell gesteuert werden. Für die Schaffung der Pufferzonen sind allerdings spezielle Thermoplastfolien oder -schichten erforderlich, die schon bei niedrigen Temperaturen plastifizierbar sind, aber den Verbund im Schichtaufbau möglichst wenig beeinflussen dürfen.

Bei einem aus der DE-AS 29 20 012 bekannten Verfahren wird der IC-Baustein in einem Vorproduktionsschritt in ein Folienlaminat eingebracht, das einen überdimensionierten Hohlraum für den IC-Baustein aufweist, in welchem der IC-Baustein durch ein federndes Material abgestützt wird. Dieser vorgefertigte Träger wird dann in eine ebenfalls mit Übermaß vorgesehene Ausnehmung der Inlettschicht des Schichtaufbaus der Ausweiskarte eingesetzt und nur durch die beiden äußeren Deckschichten lagegesichert. Abgesehen davon, daß die Herstellung sehr aufwendig ist und daß der Schichtaufbau nur kaltkaschiert wird, was zu einem unbefriedigendem Verbund führt, besteht beim Gebrauch der Ausweiskarte permanent die Gefahr, daß der Träger an den Haltebereichen der Deckfolien diese einreißt, so daß die Karte rasch unbrauchbar wird.

Bei einem aus der DE-OS 22 20 721 bekannten Verfahren ist schließlich in einem Hohlraum des Schichtaufbaus ein in-

tegrierter Schaltkreis teilweise von einer federnden Einbettmasse umgeben, und zwar nur an drei Seiten, während die Leiterbahnen und die Verbindungspunkte der Leiterbahnen mit dem Schaltkreis starr fixiert sind. Bei dieser Art der Einbettung sind die mechanischen Kräfte für die empfindlichen elektronischen Elemente unzweckmäßig hoch.

Der Erfindung liegt die Aufgabe zugrunde, ein Verfahren der eingangs genannten Art zu schaffen, mit dem mit einem eine Massenproduktion begünstigenden, geringen verfahrenstechnischen und Materialaufwand eine schonende und dauerhaft belastbare Einbettung des IC-Bausteines gewährleistet wird.

Die gestellte Aufgabe wird erfindungsgemäß durch die im kennzeichnenden Teil des Patentanspruchs 1 angegebenen Merkmale gelöst.

Beim Verschweißen des Schichtenaufbaus ist der am Träger nur lose befestigte IC-Baustein in dem an seinem Umriß eng angepaßten Ausschnitt positioniert und relativ zum abgestützten Träger keinen nennenswerten Kräften ausgesetzt. Sobald die Schichten des Schichtaufbaus plastifiziert sind, fließt der Thermoplast seitlich an den IC-Baustein hin und auch in den Fensterdurchgang des Trägers hinein, so daß der IC-Baustein schonend eingebettet wird. Unterhalb des IC-Bausteines findet nur ein sehr geringfügiges Fließen des Thermoplasts parallel zur Hauptebene des Schichtaufbaus statt, weil der IC-Baustein satt im Ausschnitt der Schicht sitzt, was den Vorteil hat, daß die Unterseite der Ausweiskarte sehr glatt und ohne unerwünschte Verzerrungen bleibt. Der Träger selbst benötigt keine die spätere Haftung begünstigende Vorbehandlung, weil er praktisch voll in den Schichtaufbau eingeschweißt ist, ausgenommen die Kontaktflächen. Selbst wenn seine Verbindung zum umgebenden Thermoplast nur schwach ist, so wird er durch die miteinander verschweißten Schichten des Schichtaufbaus so festgelegt und eingebettet, daß er auch nach einer großen Zahl von Biegungen der Ausweiskarte nicht herausgelöst wird. Der Träger hält beim Verschweissen schädliche Kräfte für den nur lose angebrachten IC-Baustein deswegen ab, weil er nach allen Seiten gut abgestützt ist. Seine Positionierung und auch die Positionierung des IC-Bausteins sind unproblematisch, da die Ausschnitte in der Inlettschicht und in der darunterliegenden Schicht für die genaue Lage des Trägers und des IC-Bausteines verantwortlich sind. Dies vereinfacht die Herstellung, da vor dem Auflegen der oberen Deckschichten nur der Träger mit dem IC-Baustein eingelegt zu werden braucht und dann schon in der korrekten Lage liegt, ehe die Deckschichten aufgebracht und der Schichtaufbau verschweißt werden.

Eine zweckmäßige Verfahrensvariante geht aus Anspruch 2 hervor. Bei gegebener Enddicke in der Ausweiskarte sind die einzelnen Schichten des Schichtaufbaus sehr dünn, was der Plastifizierung und der Verschweißung zu Gute kommt. Außerdem wird die Lagesicherung des Trägers im Schichtaufbau verbessert. Der IC-Baustein wird vom Verschweißdruck weitgehend verschont.

Zweckmäßig ist auch die Verfahrensvariante gemäß Anspruch 3, weil die Papierschichten nicht nur einen optisch günstigen Eindruck hervorrufen, sondern auch die Fälschungssicherheit in der fertigen Ausweiskarte erheblich erhöhen und zudem zu einem festen Verbund im verschweißten Schichtaufbau beitragen, weil sie den Thermoplasten aufnehmen.

Ein weiteres zweckmäßiges Verfahrensmerkmal geht aus Anspruch 5 hervor. Dieser zusätzlich aufgelegte Streifen trennt die Kontaktreihen und erhöht die Abriebfestigkeit der Ausweiskarte in diesem Bereich. Er kann zudem Zierzwecke erüllen und unterstützt das Festhalten des Trägers im Schichtaufbau auch nach vielen Biegungen der Ausweiskarte mit kleinen Biegeradien.

Ein weiterer, wichtiger Gedanke der Erfindung betrifft eine Ausweiskarte aus einem verschweißten Schichtaufbau thermoplastischer Schichten in dem in vorgeformten Ausschnitten ein Träger mit einem in einem Fenster-Durchgang des Trägers lose angebrachten IC-Baustein allseitig und ganzflächig eingebettet ist, ausgenommen auf der Oberseite des Trägers angeordneter Kontaktstellen. Da die Ränder des Trägers in der fertigen Ausweiskarte von mindestens einer Deckschicht übergriffen sind, die mit den anderen Schichten des Schichtaufbaus vollflächig verschweißt sind, wird eine feste und dauerhaft belastbare Einbettung des Trägers und des IC-Bausteins erreicht. Auch nach vielen Biegungen der Ausweiskarte können die ränder des Trägers nicht über die Oberfläche der Ausweiskarte vortreten, weil sich der Träger mit der Ausweiskarte biegen muß.

Ein besonders guter Halt des Trägers wird gemäß Anspruch 7 erzeugt, weil die beiden Deckschichten ein Durchdringen der Ränder des Trägers zur Oberseite der Ausweiskarte zuverlässig verhindern.

Zweckmäßig ist ferner eine Ausführungsform, wie sie aus Anspruch 8 entnehmbar ist. PVC als Thermoplastmaterial ist für diese Zwecke besonders geeignet, weil es sich verfahrenstechnisch einfach in Schichten ausreichend kleiner Dicke bringen und vollflächig miteinander verschweißen läßt und auch mit Papier eine festhaftende Bindung eingeht, was der Fälschungssicherheit der Ausweiskarte zugute kommt.

Die Fälschungssicherheit der Ausweiskarte kann dann noch erheblich gesteigert werden, wenn die Merkmale von Anspruch 9 vorgesehen sind. Diese mit Wasserzeichen und Identifikationsdaten versehenen Papierschichten gehen mit dem Schichtaufbau einen praktisch unlösbaren Verbund ein. Bei einem Versuch, zum Fälschen die Karte zu öffnen, werden die Papierschichten und deren Wasserzeichen oder Identifikationsdaten so sehr beschädigt, daß der Fälschungsversuch sofort erkennbar ist.

Anhand der Zeichnung wird nachstehend die Erfindung erläutert. Es zeigen:

Fig.     1          eine schematische Draufsicht auf eine Ausweiskarte,

Fig.     2          in Explosionsdarstellung den Schichtaufbau und die Komponenten der Ausweiskarte vor deren Herstellung, und

Fig.     3          einen Querschnitt durch ein Detail von Fig. 2.

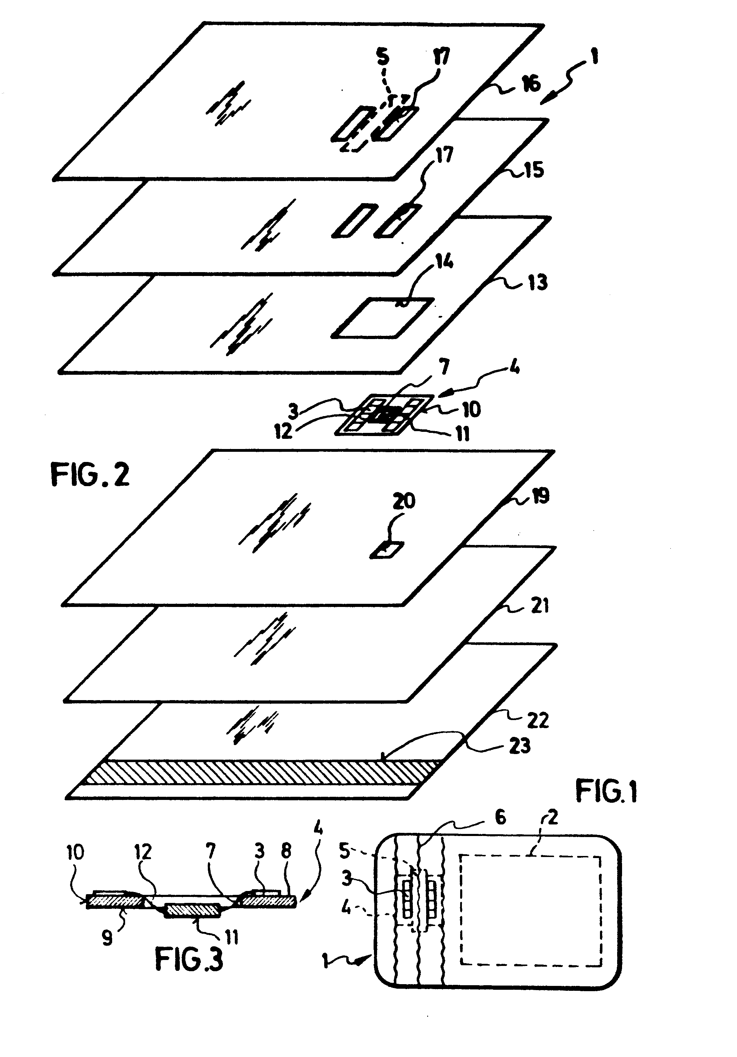

In Fig. 1 ist eine Ausweiskarte 1, eine sogenannte Chipkarte erkennbar, die das Format einer Euro-Scheckkarte bei einer Maximaldicke von 0,8 mm hat. Auf der Vorderseite der Ausweiskarte 1 sind inhaber- oder benutzerspezifische Daten in Klarschrift in einem Feld 2 aufgebracht. Nahe einem Rand der Ausweiskarte 1 ist ein Träger 4 (strichliert angedeutet) voll in die Ausweiskarte 1 integriert, der einen in Fig. 1 nicht dargestellten IC-Baustein (Fig.3) sowie an der Oberfläche der Ausweiskarte 1 freiliegende Kontaktreihen 3 aufweist. Der Stegbereich zwischen den Kontaktreihen 3 kann durch einen strichliert angedeuteten Metall- oder Dekorstreifen 5 abgedeckt sein, der mit dem Aufbau der Ausweiskarte 1 vollflächig verschweißt ist. In der Ausweiskarte 1 können ferner Wasserzeichen oder andere Kennzeichnungen vorgesehen sein, die das Fälschen oder nachträgliche Ändern der Ausweiskarte 1 unterbinden.

Gemäß Fig. 2 wird die Ausweiskarte 1 aus einem Schichtaufbau hergestellt, der aus einer obersten Deckschicht 16 mit Ausschnitten 17 für die Kontaktreihen 3, einer darunterliegenden Schicht 15 mit entsprechenden Ausschnitten 17, ferner aus einer darunterliegenden Inlett-Schicht 13 mit einem Ausschnitt 14, ferner aus einer darunterliegenden Schicht 19 mit einem kleineren Ausschnitt 20, einer darunterliegenden Schicht 21 ohne einen Ausschnitt und einer untersten Deckschicht 22 besteht. In der untersten Deckschicht 22 kann ein üblicher Magnetstreifen 23 mit darin gespeicherten Daten vorgesehen sein. Der Träger 4 (s.Fig.3) ist ein rahmenartiger Teil, z.B. an einer halbstarren Folie, und besitzt einen äußeren Rand 10 sowie einen inneren Fenster-Durchgang 7, in und unterhalb dessen der IC-Baustein 11 durch Kontaktleitungen 12 lose angehalten ist. Die Kontaktleitungen 12 stehen mit den Kontakten der Kontaktreihen 3 in Verbindung. Außerhalb der Kontaktreihen 3 sind Ränder 8 des Trägers 4 angedeutet. Die Unterseite des Trägers 4 ist mit 9 bezeichnet.

Der Ausschnitt 14 in der Inlettschicht 13 entspricht ziemlich genau dem Umriß des Randes 10 des Trägers 4. Der Ausschnitt 20 in der Schicht 19 hat exakt die gleiche Größe wie der IC-Baustein 11. Die Schichten des Schichtaufbaus können aus PVC oder einem ähnlichen unter Wärme erweichbaren und verschweißbaren Thermoplasten bestehen. Die Dicke des Trägers 4 beträgt annähernd $0,3 \pm 0,15$ mm, während die Schichten 16,15,13,21 0,1 mm und die Schichten 19 und 22 0,2 mm dick sind. Die Schichten 15,21 sind bei der gezeigten Ausführungsform Papier, das mit Wasserzeichen oder ähnlichem Dekor oder benutzerspezifischen Daten versehen ist.

Zum Herstellen der Ausweiskarte 1 werden zunächst die Schichten 22,21,19 und 13 aufeinander gelegt, ehe der vorbereitete Träger 4 in den Ausschnitt 14 eingelegt wird, wo er genau positioniert und zentriert ist. Der über die Unterseite 9 des Trägers 4 gegebenenfalls vorstehende IC-Baustein 11 paßt genau in den Ausschnitt 20. Erst dann werden die Schichten 15 und 16 aufgelegt und der Schichtaufbau in eine Verschweißeinrichtung eingebracht, in der unter dem Einfluß von Temperatur und Druck die thermoplastischen Schichten erweicht und dann miteinander verschweißt werden. Der gegen vertikale Kräfte außerordentlich empfindliche IC-Baustein wird im Ausschnitt 20 von Kräften und Bewegungen weitgehend verschont, wenn aufgrund der größeren Dicke des Trägers 4 der Thermoplast zu fließen beginnt und in den Fensterausschnitt 7 und in den Ausschnitt 20 seitlich einfließt. Der Thermoplast dringt auch in die Papierschichten 15,21 ein, so daß der endgültige Verbund nachträglich zu Fälschungen nicht mehr zerstörungsfrei geöffnet werden kann. Eine starke Haftung zwischen dem Träger 4 und dem IC-Baustein 11 und dem Thermoplast des Schichtaufbaus ist nicht erforderlich, weil diese beiden Komponenten ohnedies vollflächig in den Schichtaufbau eingebettet sind. Die Ausschnitte 17 der Schichten 15 und 16 sind so dimensioniert, daß die Ränder 8 des Trägers 4 umlaufend überdeckt sind und beim Biegen der Ausweiskarte 1 nicht über die Oberfläche vortreten können. Die Schichten 15 und 21 könnten auch weggelassen werden oder aus dem gleichen Thermoplast bestehen, wie die anderen Schichten des Aufbaus. Beim Verschweißen wird durch die größere Dicke des Trägers der Thermoplast nur zum Teil verdrängt, so daß die Ränder 8 zuverlässig abgedeckt bleiben und trotzdem die Kontaktreihen 3 freibleiben.

GRÜNECKER, KINKELDEY, STOCKMAIR & PARTNER

PATENTANWÄLTE

A. GRÜNECKER, DIPL.-ING.
DR. H. KINKELDEY, DIPL.-ING.
DR. W. STOCKMAIR, DIPL.-ING., AEE (CALTECH)
DR. K. SCHUMANN, DIPL.-PHYS.
P. H. JAKOB, DIPL.-ING.
DR. G. BEZOLD, DIPL.-CHEM.
W. MEISTER, DIPL.-ING.
H. HILGERS, DIPL.-ING.
DR. H. MEYER-PLATH, DIPL.-ING.
DR. M. BOTT-BODENHAUSEN, DIPL.-ING.
DR. U. KINKELDEY, DIPL.-CHEM.

8000 MÜNCHEN 22
MAXIMILIANSTRASSE 58

R. Oldenbourg
Graphische Betriebe GmbH
Rosenheimer Straße 145
8000 München 80

EP 3082-25/Sü
9.08.1986

# Verfahren zum Herstellen einer Ausweiskarte und Ausweiskarte

## Patentansprüche

1. Verfahren zum Herstellen einer Ausweiskarte mit einem an einem Kontakte aufweisenden Träger in einem Fenster-Durchgang lose angebrachten IC-Baustein, wobei mehrere überwiegend aus einem Thermoplast , wie PVC, bestehende Schichten eines Schichtaufbaus mit Ausschnitten zur Unterbringung des Trägers mit seinem IC-Baustein unter Druck und Temperatur miteinander verschweißt werden und den Träger mit dem IC-Baustein einbetten, d a d u r c h  g e - k e n n z e i c h n e t , daß der über die Unterseite des Trägers vorstehende IC-Baustein beim Verschweißen des Schichtaufbaus in einen eng an den Umriß des IC-Bausteins angepaßten Ausschnitt einer unter einer den Träger in einem Ausschnitt aufnehmenden Inlett-Thermoplastschicht befindlichen Schicht eingebracht wird, auf der sich der Träger abstützt, und daß der IC-Baustein gegen Ende des Ver-

schweißvorganges im Ausschnitt durch einfließenden Thermoplast eingebettet wird.

2.   Verfahren nach Anspruch 1,   d a d u r c h   g e - k e n n z e i c h n e t ,   daß auf die den Träger im Ausschnitt zentrierende Inlett-Thermoplastschicht wenigstens zwei weitere Ausschnitte für die Kontakte aufweisenden Schichten aufgelegt werden, und daß unter die den IC-Baustein im Ausschnitt aufnehmende Thermoplastschicht zwei weitere durchgehende Schichten aufgelegt werden, ehe der Schichtenaufbau verschweißt wird.

3.   Verfahren nach Anspruch 2,   d a d u r c h   g e - k e n n z e i c h n e t ,   daß die Schichten unterhalb der obersten Deckschicht und unterhalb der untersten Deckschicht Papierschichten sind.

4.   Verfahren nach Anspruch 3,   d a d u r c h   g e - k e n n z e i c h n e t ,   daß die den Ausschnitt für den IC-Baustein aufweisende Schicht und die unterste Deckschicht annähernd die doppelte Stärke der äußeren Schichten des Schichtaufbaus haben.

5.   Verfahren nach einem der Ansprüche 1 bis 4,   d a - d u r c h   g e k e n n z e i c h n e t ,   daß zwischen den gruppenweise angeordneten Kontakten des Trägers ein von außen aufgelegter Metall- oder Dekorstreifen mitverschweißt wird.

6.   Ausweiskarte, in der in einem verschweißten Schichtaufbau mit vorgeformten Ausschnitten ein Träger (4) mit einem in einem Fensterdurchgang (7) des Trägers (4) lose angebrachten IC-Baustein (11) allseitig und ganzflächig eingebettet ist, ausgenommen auf der Oberseite (8) des Trägers (4) angeordneter Kontaktstellen (3),   d a d u r c h   g e k e n n z e i c h n e t ,   daß die Ränder (8) des Trägers (4) an dessen Kontakten   (3) benachbarter Oberseite von wenigstens einer Deckschicht (15,16) übergriffen werden, die mit der Inlettschicht (13) vollflächig verschweißt ist.

7. Ausweiskarte nach Anspruch 6, d a d u r c h g e k e n n z e i c h n e t , daß auf die Inlett-schicht (13) zwei Deckschichten (15,16) aufgeschweißt sind, die beide die Ränder (8) des Trägers (4) abdecken.

8. Ausweiskarte nach den Ansprüchen 6 und 7, d a - d u r c h g e k e n n z e i c h n e t , daß der Schichtaufbau aus PVC-Schichten (16,13,19,22) besteht, von denen eine mittlere, in einem Ausschnitt (14) den Träger (4) aufnehmende Inlett-Schicht (13) oberseitig mit mindestens einer Deckschicht (16) und unterseitig mit einer eine Aussparung (20) für den IC-Baustein (11) aufweisenden Schicht (19) und mit mindestens einer weiteren untersten Deckschicht (22) verschweißt ist.

9. Ausweiskarte nach Anspruch 8, d a d u r c h g e k e n n z e i c h n e t , daß unter der obersten Deckschicht (16) und auf der untersten Deckschicht (22) jeweils eine, vorzugsweise mit Wasserzeichen und Identifikationsdaten versehene, Papierschicht (15,21) vorgesehen ist, wobei die untere Papierschicht (21) der Unterseite des IC-Bausteins (11) berührend benachbart ist.

FIG.2

FIG.1

FIG.3